# EUROPÄISCHE PATENTANMELDUNG

(11) **EP 2 386 720 A1**
(43) Veröffentlichungstag der Anmeldung: **16.11.2011**
(21) Anmeldenummer: 10004987.3
(22) Anmeldetag: 11.05.2010
(51) Int. Cl.: F01D 5/14, F01D 25/30, F02C 6/18, F01K 17/02, F01K 23/10

(54) **Abgasdiffusor mit Lochblende**

(71) Anmelder: SIEMENS AKTIENGESELLSCHAFT, 80333 München (DE)
(72) Erfinder: Bröker, Marc, 46535 Dinslaken (DE); Buchal, Tobias, Dr., 40489 Düsseldorf (DE)

(57) **Zusammenfassung**

Die Erfindung betrifft einen Strömungskanal (12) für den Abgasstrom einer stationären Gasturbine (10), bei der an der in den Strömungskanal (12) begrenzende Wand (14) ein radial in den Strömungskanal ragender Kragen (22) vorgesehen ist, um durch Turbulenzerzeugung eine bessere radiale Durchmischung der wandnahen Strömung und eine geringere Ablöseneigung zu erreichen. Als Kragen ist eine Lochblende vorgesehen.

## Beschreibung

Die Erfindung betrifft einen Strömungskanal für den Abgasstrom einer stationären Gasturbine mit einer äußeren Begrenzungswand. Ein derartiger Strömungskanal ist meist als Diffusor konzipiert und dient zur Verzögerung der Abgasströmung der Gasturbine und zur teilweisen Rückgewinnung des Staudrucks. Um einen Abgasdiffusor mit einem vergleichsweise großen Öffnungswinkel von 10° und mehr anzugeben, ist beispielsweise aus der DE 198 05 115 A1 bekannt, im Zentrum des Diffusorkanals einen sich axial erstreckenden Leitkörper vorzusehen. Nachteilig ist jedoch, dass der Leitkörper vergleichsweise lang ist und aufgrund seiner Länge deswegen durch zusätzliche Streben abgestützt werden muss. Weiter sind die aerodynamischen Einflüsse der Lagerstreben unberücksichtigt.

Der Erfindung liegt daher die Aufgabe zugrunde, einen Strömungskanal für den Abgasstrom einer stationären Gasturbine anzugeben, der zur Erzielung eines möglichst hohen Wirkungsgrades der Gasturbine eine Verbesserung des Druckrückgewinns ermöglicht.

Die Aufgabe wird erfindungsgemäß gelöst durch einen Strömungskanal gemäß den Merkmalen des Anspruchs 1. Gemäß diesem ist im Strömungsweg des Abgas-Strömungskanals einer stationären Gasturbine eine quer zur Strömungsrichtung angeordnete Lochblende als Kragen vorgesehen.

Der Erfindung liegt dabei die Erkenntnis zugrunde, dass mit dem Kragen der wandnahe Strömungswiderstand abgeändert werden kann. Gleichzeitig werden durch ihn Turbulenzen erzeugt, welche zu einer besseren radialen Durchmischung der wandnahen Strömung führt. Dies verringert die Ablöseneigung des an der Wand entlang strömenden Abgases, was den effizienten Einsatzbereich des Strömungskanals verbreitert.

Der Kragen ist dabei als erste Lochblende ausgestaltet. Hierdurch wird im Kragenbereich eine großflächige, zusammenhängende Verblockung des Strömungskanals verhindert. Das Verblockungsgebiet ist durch die Vielzahl der Löcher zwar weiterhin zusammenhängend, jedoch aufgrund dessen mit ebenso vielen Durchströmungsgebieten versehen. Größere Flächeneinheiten ohne Durchströmungsgebiete werden somit vermieden, welche ansonsten zu so genannten Totwassergebieten geführt hätten, die sich im Strömungsschatten von nicht durchströmten Flächeneinheiten evtl. ausbilden können. Weiter wird durch die Lochblende die Turbulenzerzeugung gesteigert, was zu einer weiter verbesserten radialen Durchmischung der wandnahen Strömung führt. Weiter kann die Ablöseneigung der Strömung vermindert werden.

Weiterhin kann eine Vergleichmäßigung der Strömung erreicht werden, so dass in einem der Gasturbine nachgeschalteten Abhitzedampferzeuger eine möglichst homogene Einströmung des heißen Abgases aus der Gasturbine erfolgen kann.

Vorteilhafte Ausgestaltungen sind in den Unteransprüchen nachfolgend angegeben.

Die Lochblende kann dabei vorteilhafterweise entweder in Ringform, d.h. als Ringlochblende und/oder in Kreisform, d.h. als Kreislochblende ausgestaltet sein. Die Ringlochblende ist an der äußeren Wand des Strömungskanals befestigt und somit in Lage, die wandnahe Strömung zu beeinflussen bzw. anzupassen. Die Kreislochblende dagegen ist dafür vorgesehen, die im und um den Mittelpunkt des Kanalsquerschnitts auftretende Kernströmung des Diffusors zu beeinflussen. Mit Hilfe derartiger Lochblenden kann das radiale Geschwindigkeitsprofil beliebig manipuliert werden, um einerseits eine effiziente Durchströmung zu erhalten und andererseits Ablösungen zu vermeiden.

Gemäß einer weiteren Ausgestaltung ist vorgesehen, dass der Kragen eine weitere Lochblende umfasst, welche gegenüber der ersten Lochblende verschiebbar ist. Auch die weitere Lochblende kann als Ringlochblende oder als Kreislochblende ausgebildet sein. Die in beiden Lochblenden jeweils vorhandenen Löcher können somit mehr oder minder in Überdeckung gebracht werden, wodurch die unblockierte durchströmbare Fläche des Strömungskanals einstellbar ist. Dadurch ist es möglich, den Abfall des Wirkungsgrades vergleichsweise gering zu halten, wenn der Strömungskanal in einem Zustand betrieben wird, welcher vom Auslegungspunkt abweicht. Weiter kann damit eine möglichst gleichmäßige Geschwindigkeitsverteilung erreicht werden.

Üblicherweise ist der Strömungskanal im Querschnitt ringförmig, kreisförmig oder rechteckig. Bekanntermaßen ist der Strömungskanal als Diffusor ausgebildet. Somit wird mit Hilfe des Kragens und der ggf. verschiebbaren Lochblenden ein Strömungsausgangsdiffusor einer Gasturbine angegeben, welcher eine vergleichmäßigte Geschwindigkeitsverteilung aufweist. Diese ermöglicht die Erreichung eines besonders guten Kesselwirkungsgrades und den zuverlässigen Einsatzes von Nachbrennern am Kesseleintritt.

Dabei ist vorzugsweise dessen Öffnungswinkel stromauf des Kragens kleiner als stromab. Der vergrößerte Öffnungswinkel stromab des Kragens führt dann zu einer verkürzten platzsparenden Bauweise des Diffusors, welcher somit auch kostensparend herstellbar ist.

Gemäß einer weiteren vorteilhaften Ausgestaltung kann der Kragen bzw. dessen erste Lochblende und/oder dessen weitere Lochblende sich auch nur teilweise entlang der Querschnittskontur des Strömungskanals erstrecken. Dann handelt es sich um eine Segmentlochblende. Es ist somit nicht zwingend erforderlich, dass der Kragen endlos umlaufend ist. Je nach Auslegungsziel kann es also bereits ausreichend sein, wenn an einem oder zwei in Umfangsrichtung verteilten Positionen, ein sich quer zur Strömungsrichtung erstreckender, in den Strömungsweg hineinragender Kragen vorgesehen ist.

Sofern der Strömungskanal im Querschnitt rechteckig ist und somit vier senkrecht zueinander stehende Kanalwände aufweist, kann es ausreichend sein, wenn lediglich an einem der Kanalwände ein sich quer zur Strömungsrichtung in den Strömungsweg hineinragender Kragen vorgesehen ist. Selbstverständlich kann auch dieser Kragen als (erste) Lochblende ausgestaltet sein und ggf. eine weitere Lochblende umfassen, welche gegenüber der (ersten) Lochblende verschiebbar ist.

Es hat sich herausgestellt, dass bei einer Ringlochblende der Kragen jedoch vorzugsweise nur derart tief in den Strömungskanal hineinragt, dass im Wesentlichen die wandnahe Strömung durch diesen beeinflussbar ist. Die im Zentrum des Strömungskanals strömende Kernströmung kann, sofern erforderlich, weitestgehend von der Ringlochblende unmittelbar unbeeinflusst sein. Bevorzugt ist mindestens 80% der von der Wand des Strömungskanals umgebenen Querschnittsfläche lochblendenfrei.

Mit der Erfindung wird insgesamt auch ein Diffusor für den Abgasstrom einer stationären Gasturbine angeben, welcher insbesondere beim Betrieb abseits des Auslegungspunkts, d.h. bei Teillast der Gasturbine, vergleichsweise effizient betrieben werden kann. Strömungsablösung im Abgasdiffusor können trotz der Änderung des Öffnungswinkels und der damit einhergehenden Strömungsumlenkung aufgrund der Querschnittserweiterung vermieden werden.

Weitere vorteilhafte Ausgestaltungen der Erfindung sind in der Zeichnung angegeben.

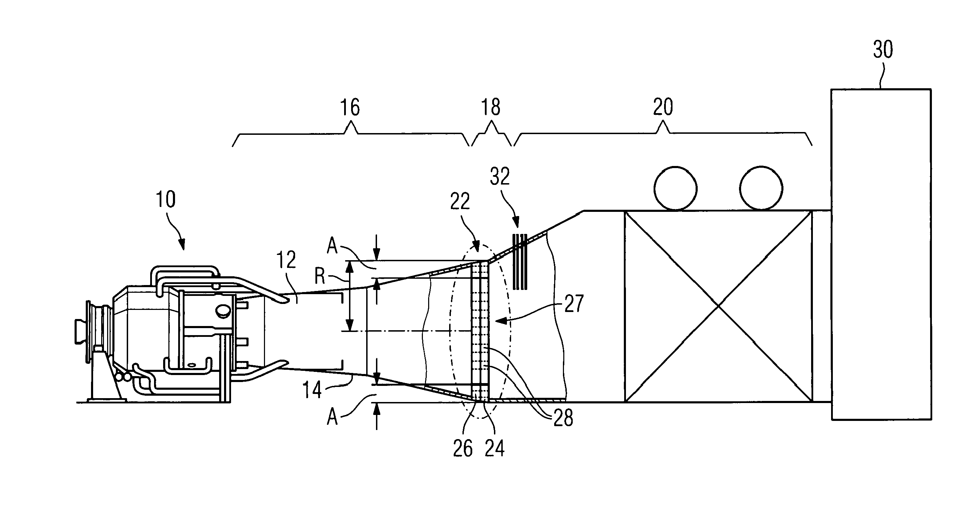

Es zeigt FIG 1 die Seitenansicht einer Gasturbinenanlage mit einem Strömungskanal für den Abgasstrom und einen sich an dem Strömungskanal anschließenden Kessel eines GuD-Kraftwerks. Die einzige Figur zeigt eine Gasturbine 10 mit einem Strömungskanal 12 für den Abgasstrom des in der stationären Gasturbine 10 erzeugten Heißgases. Der Strömungskanal 12 ist dabei von einer äußeren Wand 14 begrenzt. In einem ersten Abschnitt 16 weist der Strömungskanal 12, im Querschnitt gesehen, eine kreisförmige oder ringförmige Kontur auf, d.h. die äußere Wand 14 ist im Querschnitt betrachtet kreisförmig. Im Abschnitt 18, welcher sich an den Abschnitt 16 anschließt, erfolgt eine Anpassung der äußeren Kontur auf einem rechteckigen Querschnitt. In Abschnitt 20 ist der Strömungskanal rechteckig. In den Abschnitten 16, 18, 20 nimmt die von der Wand 14 umgebene Querschnittsfläche des Strömungskanals 12 in Strömungsrichtung stetig zu, so dass der Strömungskanal 12 als Diffusor ausgebildet ist.

Im Übergangsbereich zwischen Abschnitt 16 und Abschnitt 18 ist ein sich in den Strömungsweg 12 hineinragender Kragen 22 vorgesehen. Der Kragen 22 ist an der äußeren Wand 14 befestigt und umfasst eine erste Lochblende 24 und eine weitere Lochblende 26. Beide Lochblenden 24, 26 sind in der Form eines Ringes gebildet, wobei der Ring eine zentrale Öffnung 27 aufweist, welche beispielsweise 80% desjenigen Querschnitts beträgt, welcher von der äußeren Wand 14 eingeschlossen ist. Mit anderen Worten: Der kreisrunde Kragen hat eine Ringdicke A von ca. 10,5% desjenigen Radius R, auf dem die Kanalwände 14 angeordnet sind. Die Lochblenden 24, 26 weisen entlang ihres Umfangs eine Vielzahl von Löchern auf, welche in FIG 1 lediglich schematisch angedeutet und mit dem Bezugszeichen 28 gekennzeichnet sind. In Strömungsrichtung betrachtet, ist dabei die Gesamtfläche aller in den Lochblenden 24, 26 vorhandener Löcher (abgesehen von der zentralen Öffnung) größer als diejenige Fläche der Lochblenden 24, 26, welche quer in den Strömungskanal 12 hineinragt und damit eine Blockierung des Strömungskanals 12 hervorruft. Die Löcher 28 der Lochblenden 24, 26 sind dabei derart passend zueinander angeordnet, dass durch Verschiebung der weiteren Lochblende 26 deren Löcher 28 ganz oder auch nur teilweise in Überdeckung mit den Löchern 28 der ersten Lochblende 24 gebracht werden können. Zur Verdrehung der weiteren Lochblende 26 ist ein nicht weiter dargestellter Antrieb vorgesehen, welcher hydraulisch oder elektrisch betätigbar mit Hilfe von Schubstangen die weitere Lochblende 26 in Umfangsrichtung verdrehen kann. Hierbei ist ein nur vergleichweise kurzer Verdrehwinkel von einigen Grad erforderlich. Mit Hilfe des Kragens 22 und der Lochblenden 24, 26 ist es möglich, den Strömungswiderstand des Diffusors einzustellen und gleichzeitig dabei Turbulenzen zu erzeugen. Insbesondere Letztere führen zu einer besseren radialen Durchmischung der wandnahen Strömung, was sich in einer geringeren Ablöseneigung niederschlägt. Hierdurch werden wandnahe Rückströmgebiete verhindert, was den Wirkungsgrad des Diffusors verbessert und auch den dauerhaften und zuverlässigen Einsatz von Nachbrennern am Kesseleintritt eines dem Strömungskanal 12 ggf. nachgeschalteten Kessels 30 ermöglicht. Es kann eine Vergleichmäßigung der Strömung am Einlauf zum Kessel und eine Verkleinerung der Ablöse- und Rückströmzonen erreicht werden.

Das Verschieben der Lochblenden 24, 26 gegeneinander kann einerseits während der Inbetriebnahme erfolgen oder andererseits während des Betriebs der Gasturbine als Optimierung für den jeweiligen Betriebspunkt.

Sofern der Kragen 22 bzw. die Lochblenden 24, 26 im Abschnitt 16 angeordnet sind, sind diese als Ringe ausgebildet. Ergänzend oder alternativ dazu können vergleichbare Kragen 22 und Lochblenden 24, 26 auch in denjenigen Abschnitten 20 des Strömungskanals 12 vorgesehen sein, der rechteckig ist. In diesem Fall sind rechteckige Blenden 32 nahe der oberen Wand des Kesseleinlaufs vorgesehen, die gegeneinander verschoben werden können.

Insgesamt wird mit der Erfindung ein Strömungskanal 12 für den Abgasstrom einer stationären Gasturbine 10 angegeben, bei der an der in den Strömungskanal 12 begrenzende Wand 14 ein radial in den Strömungskanal ragender Kragen 22 vorgesehen ist, um durch Turbulenzerzeugung eine bessere radiale Durchmischung der wandnahen Strömung und eine geringere Ablöseneigung zu erreichen.

## Patentansprüche

1. Strömungskanal (12) für den Abgasstrom einer stationären Gasturbine,
welcher von einer äußeren Wand (14) begrenzt ist,
**dadurch gekennzeichnet,**
**dass** im Strömungsweg des Strömungskanals (12) eine quer zur Strömungsrichtung angeordnete Lochblende (22) als Kragen (12) vorgesehen ist.

2. Strömungskanal (12) nach Anspruch 1,
bei dem die Lochblende (22) entweder als Ringlochblende, welche an der äußeren Wand (14) des Strömungskanals (12) angeordnet ist, und/oder als Kreislochblende, welche im Zentrum des Querschnitts des Strömungskanals (12) angeordnet ist, ausgestaltet sind.

3. Strömungskanal (12) nach Anspruch 1 oder 2,
bei dem der Kragen (22) eine weitere Lochblende (26) umfasst, welche gegenüber der Lochblende (24) verschiebbar ist.

4. Strömungskanal (12) nach Anspruch 1, 2 oder 3,
bei dem die äußere Wand (14) des Strömungskanals (12) im Querschnitt (senkrecht zur Strömungsrichtung) kreisförmig oder rechteckig ist.

5. Strömungskanal (12) nach einem der vorangehenden Ansprüche,
ausgebildet als Diffusor, dessen Öffnungswinkel stromauf des Kragens (22) kleiner ist als stromab.

6. Strömungskanal (12) nach einem der vorangehenden Ansprüche,
bei dem der Kragen (22) sich zumindest teilweise entlang der Querschnittskontur des Strömungskanals (12) erstreckt.

7. Strömungskanal (12) nach einem der vorangehenden Ansprüche,
bei dem mehrere Kragen (22) vorgesehen sind.
